# EUROPEAN PATENT APPLICATION

(11) **EP 4 737 420 A1**
(43) Date of publication of application: **06.05.2026**
(21) Application number: 24209588.3
(22) Date of filing: 29.10.2024
(51) Int. Cl.: C04B 7/12, C04B 7/36, C04B 7/43, C04B 7/44, C04B 7/46

(54) **METHOD OF PRODUCING A POZZOLANIC MATERIAL IN A CEMENT MANUFACTURING PLANT**

(71) Applicant: Holcim Technology Ltd, 6300 Zug (CH)
(72) Inventor: DAMLJANOVIC, Dejan, 1020 Wien (AT); MILICEV, Dejan, 8461 Retznei (AT); GARAI, Gergely, 7940 Szentl rinc (HU); BARBARULO, Rémi, 38070 Saint-Quentin-Fallavier (FR)
(74) Representative: SONN Patentanwälte GmbH & Co KG

(57) **Abstract**

Method of producing a pozzolanic material in a cement manufacturing plant, comprising:
- providing a silico-aluminous mineral material susceptible of pozzolanic reactivity upon calcination,
- introducing the silico-aluminous mineral material into the rotary kiln via the kiln feed installation without having been thermally treated in the combustion chamber and calcining the silico-aluminous mineral material in the rotary kiln at a temperature of 400-900°C, preferably 600-900°C, in order to obtain said pozzolanic material,
combusting a non-fossil, alternative fuel by means of the main burner for providing thermal energy to the calcination process,
- guiding the combustion gas from the kiln inlet chamber into the combustion chamber and combusting a fuel in the combustion chamber, thereby raising the temperature of the combustion gas to an elevated temperature of above 850°C and keeping the combustion gas at said elevated temperature for at least 2 seconds.

## Description

Various types of mineral components may be added to Portland cement in order to obtain composite cements. In particular, it has become common practice to use pozzolanic and/or latent hydraulic material as supplementary cementitious materials in Portland cement mixtures.

By substituting supplementary cementitious materials for Portland cement the specific emission of CO₂ in the production of cement will be reduced. During the production of Portland cement clinker a considerable amount of CO₂ per ton of Portland cement clinker is emitted by the decarbonation of the raw materials and from the oxidation of the fuels that occur during calcination of the raw materials in rotary kilns.

Supplementary cementitious materials comprise a broad class of siliceous or siliceous and aluminous materials which, in finely divided form and in the presence of water, chemically react with calcium hydroxide at ordinary temperature to form compounds possessing cementitious properties. Examples of supplementary cementitious materials include granulated blast-furnace slag, fly ash, natural pozzolans, burnt oil shale, or calcined clay.

Cement is a product that in most cases is used in locations relatively close to where it is manufactured. Therefore, in case of composite cements, its production requires the availability of a source of a supplementary cementitious material, this source being either natural or synthetic. However, the local availability of such source is not guaranteed in all regions where cement is produced, mainly because of the decreasing availability of some synthetic sources of supplementary cementitious materials. Synthetic supplementary cementitious materials are in most cases a byproduct of various industrial processes, such as fly ash from coal-fired power plants or blast-furnace slag from steel mills. The decreasing supply of fly ash from the power industry is encouraging the search for new sources of supplementary cementitious materials for the cement and concrete production.

Therefore, increasing efforts are undertaken to use widely available sources for producing supplementary cementitious materials, such as calcined clays. Various types of silico-aluminous mineral materials, such as raw clay, can be treated thermally by heating to a temperature high enough to alter the structure of the clay minerals by dehydroxylation, but low enough to avoid recrystallization and the formation of chemically inert phases such as mullite. A particularly useful type of clay is kaolinite that has a layered silicate structure, composed of alternating layers of tetrahedral sheets of silica and octahedral sheets of alumina linked with each other by oxygen atoms. When kaolinite is heated during a calcination process, dehydroxylation and transformation of the kaolinite into a material known as metakaolin are occurring.

Various methods have been proposed for producing calcined clay. One option is to use an existing rotary kiln of a cement manufacturing plant in order to calcine raw clay. When calcining raw clay, the calcination temperature shall be maintained in a range of 600-900°C in order to achieve dehydroxylation of the clay minerals while preserving the reactive structure of the calcined product. Dehydroxylation, which occurs between 400-900°C, preferentially between 600-900°C, involves the removal of chemically bound water (hydroxyl groups) from the clay minerals, transforming them into a reactive state. However, if the temperature is too high (above 900°C), chemical reactions will occur and the calcined clay may begin to recrystallize, forming less reactive crystalline phases such as mullite or cristobalite.

When using a rotary kiln for calcining raw clay, the raw material is travelling from an inlet end of the kiln to an outlet and, while combustion gases are flowing in counter current from the outlet end to the inlet end, which results in that the combustion gas leaves the rotary kiln at a temperature of about 500°C.

If an alternative fuel is used in the rotary kiln to provide the thermal energy needed for calcining the raw material, volatile organic compounds (VOC) contained in the alternative fuels may be released and/or transformed to undesired pollutants that would be released into the environment as part of the combustion gas.

An alternative fuel is here defined as a fuel that is not a fossil fuel, i.e. not a natural fuel such as coal or gas, formed in the geological past from the remains of living organisms.

In order to minimise air pollution, the EU Industrial Emissions Directive (IED) 2010/75/EU requires cement kilns co-incinerating waste to comply with the provision that the temperature of the combustion gases resulting from the co-incineration of waste shall be raised in a controlled and homogeneous fashion and even under the most unfavourable conditions to at least 850°C for at least two seconds after the last injection of air. The high temperature and sufficient residence time help to ensure complete combustion and destruction of harmful substances.

Therefore, it is an object of the invention to adapt a method of producing pozzolanic material so that no undesired pollutants are released to the environment.

In order to solve this object, the invention provides a method of producing a pozzolanic material in a cement manufacturing plant, the plant comprising a rotary kiln having an inlet end with a kiln inlet chamber and an outlet end, a main burner arranged at the outlet end, a combustion chamber connected to the kiln inlet chamber and a kiln feed installation opening into the kiln inlet chamber for feeding a raw material into the rotary kiln, wherein the rotary kiln is configured to calcine a raw material travelling from the inlet end to the outlet end in counter current to a combustion gas, the method comprising:
- providing a silico-aluminous mineral material susceptible of pozzolanic reactivity upon calcination,
- introducing the silico-aluminous mineral material into the rotary kiln via the kiln feed installation without having been thermally treated in the combustion chamber and calcining the silico-aluminous mineral material in the rotary kiln at a temperature of 400-900°C, preferentially 600-900°C, in order to obtain said pozzolanic material,
- combusting an alternative fuel by means of the main burner for providing thermal energy to the calcination process,
- guiding the combustion gas from the kiln inlet chamber into the combustion chamber and providing an additional source of heat in the combustion chamber, thereby raising the temperature of the combustion gas to an elevated temperature of above 850°C and keeping the combustion gas at said elevated temperature for at least 2 seconds.

Thus, the invention is based on the idea of post-treating the combustion gas, which has too low a temperature due to the calcination step carried out in a rotary kiln, by increasing the temperature of the combustion gas in a combustion chamber arranged downstream of the rotary kiln, viewed in the direction of flow of the combustion gas. By combusting the alternative fuel using the main burner of the rotary kiln and guiding the resulting combustion gas into a separate combustion chamber where its temperature is raised to above 850°C for at least 2 seconds, the method ensures complete combustion and destruction of harmful substances, such as volatile organic compounds (VOCs), that may be present in the alternative fuel.

The method of the invention ensures that the requirements of the EU Industrial Emissions Directive (IED) 2010/75/EU are met. Further, by treating the combustion gases in a separate combustion chamber, the invention allows the temperature in the rotary kiln to be maintained within the optimal range for calcining the silico-aluminous mineral material, ensuring the production of a highly reactive pozzolanic material while preventing the formation of less reactive crystalline phases.

The additional source of heat provided in the combustion chamber can be obtained from combusting a fuel, or solely from electrical energy, or from a combination of the combustion of a fuel and the use of electrical energy. Examples of sources of heat from electrical energy are plasma burners, or radiative elements. Any fuel can be used to provide an additional source of heat, including for example hydrogen or alternative fuels.

By enabling the use of alternative fuels, such as waste-derived fuels, the method reduces the reliance on conventional fossil fuels and contributes to the circular economy. This not only lowers the carbon footprint of the cement manufacturing process but also helps to address the issue of waste management by providing a means for the safe and efficient disposal of certain types of waste materials. Non-fossil, alternative fuels can be used as the only fuel for the main burner of the rotary kiln or can be mixed with conventional, fossil-based fuels, such as coal, petcoke or natural gas.

Preferably, a high proportion of alternative fuels can be used, so that the alternative fuels contribute at least 50 wt.-%, preferably at least 75 wt.-%, in particular at least 90 wt.-% of the thermal energy to the calcination process, in order to meet the energy requirements of the calcination process.

Examples of alternative fuels to be used in the main burner include:
- Refuse-derived fuel (RDF), such as municipal solid waste (MSW), industrial waste, or commercial waste,
- Biomass fuels, such as wood chips, sawdust, agricultural residues, such as rice husk, sugarcane bagasse, or coconut shells,
- Meat and bone meal,
- Dried sewage sludge from wastewater treatment plants,
- Waste oils and solvents,
- Plastic waste, such as mixed plastic scrap or post-consumer plastic packaging, that has been shredded, granulated, or converted into a liquid or solid fuel through pyrolysis or other thermal treatment processes.

In the invention, it is essential to introduce the silico-aluminous mineral material into the rotary kiln via the kiln feed installation without prior thermal treatment in the combustion chamber. This approach differs from the conventional cement manufacturing process, where the raw material is typically precalcined in the combustion chamber before being introduced into the rotary kiln. By avoiding the precalcination step, the invention prevents overburning of the silico-aluminous mineral material, which is crucial for maintaining its pozzolanic reactivity.

In a preferred embodiment of the invention, a non-fossil waste material, such as a waste solvent, is used as the fuel in the combustion chamber. Waste solvents have a high calorific value, providing an efficient source of thermal energy for the combustion process. Utilising waste solvents as a fuel reduces the demand for virgin fossil fuels, contributing to the reduction of the carbon footprint of the process of the invention. By repurposing waste materials as a fuel source, the invention addresses environmental challenges associated with waste disposal.

In another preferred embodiment of the invention, a non-fossil liquid fuel, such as a waste solvent, is used as the fuel in the combustion chamber. Various types of waste solvents may be used as a fuel in the combustion chamber. These waste solvents may include, but are not limited to, spent solvents from industrial processes, such as those used in the chemical, pharmaceutical, printing, and automotive industries. Examples of suitable waste solvents include hydrocarbon-based solvents, such as petroleum distillates, mineral spirits, and kerosene; oxygenated solvents, such as alcohols, ketones, and esters; and halogenated solvents, such as chlorinated hydrocarbons.

In a preferred embodiment of the invention, the fuel used in the combustion chamber has a chloride content of less than 0.2 wt.-%. This low chloride content is beneficial for minimising the formation of undesirable byproducts and ensuring the quality of the final pozzolanic material. When fuels with high chloride content are combusted, they can lead to the formation of chlorine-containing compounds, such as hydrogen chloride (HCl) and alkaline chlorides. These compounds can cause several issues in the manufacturing process. HCl can contribute to the corrosion of the combustion chamber and other equipment, leading to increased maintenance costs and reduced operational efficiency. Additionally, the presence of alkaline chlorides in the combustion gases can lead to the formation of chloride-containing phases in the pozzolanic material, which may negatively impact its suitability to be used in construction materials.

In a preferred embodiment of the invention, the combustion chamber is a precalciner of the cement manufacturing plant. An inline precalciner is a combustion chamber typically located between the preheater and the rotary kiln in a modern cement plant. In a conventional cement clinker manufacturing process, the primary function of a precalciner is to carry out the initial stage of the calcination process, where the raw materials, mainly limestone, are partially calcined before entering the rotary kiln. In the instant invention, the existing precalciner is, however, used as the combustion chamber for increasing the temperature of the combustion gas coming from the rotary kiln. Thus, no precalcination of a solid raw material is carried out in the precalciner.

Using the precalciner as the combustion chamber of the invention is beneficial, since the precalciner is already designed to handle large volumes of gas and is equipped with an efficient combustion system, making it well-suited for the combustion of alternative fuels, such as waste solvents. The precalciner's design allows for the efficient mixing of the fuel and combustion air, ensuring complete combustion of the fuel and the destruction of any harmful substances present in the combustion gas coming from the rotary kiln and of the fuel.

When using a liquid alternative fuel, the fuel can be introduced into the combustion chamber or precalciner through a dedicated fuel injection system. The fuel injection system may comprise a nozzle or atomizer for atomizing the liquid fuel into fine droplets before being introduced into the precalciner. Further, the fuel injection system may comprise a fuel injection lance or burner for injecting the fuel into the precalciner. Preferably, the injection lance or burner is positioned to ensure optimal mixing of the fuel with the combustion air and the hot gases in the combustion chamber or precalciner.

In a preferred embodiment of the invention, the waste heat from the combustion chamber may be recuperated by withdrawing the combustion gas from the combustion chamber and using the combustion gas to dry and/or preheat the silico-aluminous mineral material before it is introduced into the rotary kiln. This embodiment improves the energy efficiency of the process. In this embodiment, the hot combustion gases from the combustion chamber, typically the precalciner, are directed to a heat exchange system, such as a suspension preheater or a flash dryer, where they come into direct or indirect contact with the silico-aluminous mineral material. The combustion gases, after transferring their thermal energy to the silico-aluminous mineral material in the heat exchange system, can be further treated to remove any particulate matter or other pollutants before being released into the atmosphere. This treatment may include the use of bag filters, electrostatic precipitators, or other emission control devices, ensuring compliance with the relevant environmental regulations.

In order to use existing equipment of the cement manufacturing plant for preheating the silico-aluminous mineral material, a preferred embodiment provides that the cement manufacturing plant comprises a preheater tower with at least one string of cyclone preheaters. The hot combustion gases generated in the combustion chamber, typically the precalciner, are led through the string of cyclone preheaters in a counter-current manner to the flow of the silico-aluminous mineral material. This configuration enables the efficient preheating and drying of the mineral material before it enters the rotary kiln.

The preheater tower is a vertical structure consisting of a series of cyclone preheaters arranged in a string. Each cyclone preheater may preferably be configured as a conical-shaped vessel that utilises the principles of centrifugal force and gravity to separate solid particles from the gas stream. The silico-aluminous mineral material is introduced into the top of the preheater tower and flows downwards through the string of cyclone preheaters, while the hot combustion gases from the precalciner are directed into the bottom of the tower and flow upwards through the cyclones. As the silico-aluminous mineral material descends through the preheater tower, it comes into contact with the ascending hot combustion gases in each cyclone stage. The counter-current flow arrangement ensures efficient heat transfer between the gases and the mineral material, thereby gradually preheating the material.

In another embodiment, the silico-aluminous mineral material is directly added to the kiln inlet via the kiln feed installation, whereby the introduction of the silico-aluminous mineral material bypasses the preheater tower.

In another embodiment, the combustion gas is withdrawn from the combustion chamber without being subsequently used for preheating the silico-aluminous mineral material. Preheating and optionally drying of the silico-aluminous mineral material may in this case be carried out with another source of waste or electrical heat from the calcination process, such as by using waste gas from a cooling installation used for cooling the pozzolanic material.

In yet another embodiment, the combustion gas is withdrawn from the preheater tower to preheat and optionally dry the silico-aluminous mineral material.

In a preferred embodiment of the invention, an additional non-fossil, alternative fuel is introduced into the rotary kiln via the kiln inlet chamber, preferably mixed with the silico-aluminous mineral material. The alternative fuel, preferably being in a mixture with the silico-aluminous mineral material, is subjected to a gasification process within the rotary kiln to obtain a syngas. Preferably, the syngas produced is then guided into the combustion chamber, typically the precalciner, where it is used as the sole fuel or constitutes a partial amount of the fuel for the combustion process. This embodiment maximises the utilisation of the alternative fuel, enhances the overall energy efficiency, and reduces the reliance on fossil fuels in the pozzolanic material production process.

The non-fossil, alternative fuel used in this embodiment can be derived from various sources, such as biomass, waste materials, or refuse-derived fuels (RDF). These alternative fuels may be selected based on their chemical composition, calorific value, and suitability for gasification. The alternative fuel is introduced either into the rotary kiln through the kiln inlet chamber, which is located at the feed end of the rotary kiln, or directly above the kiln inlet chamber. To ensure efficient gasification, the alternative fuel is preferably mixed with the silico-aluminous mineral material before entering the rotary kiln. This mixing can be achieved using various methods, such as co-feeding the fuel and the mineral material using a screw conveyor or a pneumatic transport system. The intimate mixing of the fuel and the mineral material creates favourable conditions for the gasification reactions by providing a uniform distribution of the fuel throughout the bed of the mineral material. Gasification occurs in an oxygen-deficient atmosphere, where the amount of oxygen available is controlled to promote the formation of syngas. In the rotary kiln, the oxygen supply can be regulated by adjusting the primary air flow and the fuel-to-air ratio.

The syngas produced from the gasification of the alternative fuel primarily consists of carbon monoxide (CO) and hydrogen (H₂), with smaller quantities of carbon dioxide (CO₂) and methane (CH₄). This syngas possesses a significant calorific value and is an excellent fuel source for the combustion process in the precalciner.

In a preferred embodiment of the invention, the cement manufacturing plant comprises a cooler arranged at the outlet end of the rotary kiln for cooling the pozzolanic material, wherein ambient air is led through the cooler as a cooling medium and, after having been preheated in the cooler, is used as combustion air in the combustion chamber. The cooler acts as a heat recovery system, capturing the waste heat from the hot pozzolanic material and transferring it to the combustion air. This heat recovery process improves the overall energy efficiency of the manufacturing plant, as the recovered heat can effectively be utilised in the combustion chamber, reducing the reliance on external heat sources.

Preferably, a raw clay material is used as said silico-aluminous mineral material. The raw clay material may preferably comprise at least 40 wt.-% raw clay. This substantial proportion of raw clay ensures that the final calcined material retains a high content of aluminosilicates, which are essential for the pozzolanic reaction in cementitious applications.

The suitable particle size for the raw clay material in the calcination process may be selected according to the circumstance of the individual process. A finer particle size is generally preferred as it provides a larger surface area for the heat and chemical reactions to occur, facilitating a more uniform and complete calcination. However, the particle size should not be excessively fine as it can lead to operational challenges like dusting or handling difficulties. The optimal particle size is typically determined through a balance between maximising reactivity and practical considerations related to processing and handling in the specific calcination system being used. Preferably, the particle size of the raw clay material when being subjected to the calcination step is in the range of 50 micrometres to 50 millimetres.

The raw clay material may contain various clay minerals, such as kaolinite, smectite, illite, sepiolite, attapulgite, muscovite, and/or vermiculite.

Preferably, the silico-aluminous mineral material comprises a water content of 5-25 wt.-% of the total weight of the silico-aluminous mineral material. In case the silico-aluminous mineral material has a humidity above 25 wt.-%, waste heat from the cement process can be used to reduce the amount of water in the material before the material is being introduced into the clinker kiln.

In order to safely achieve pozzolanic activation of the silico-aluminous mineral material, the method of the invention preferably comprises an initial step of selecting a silico-aluminous mineral material that activates its pozzolanic activity within a temperature range of 400-900°C, preferably 600-900°C, preferably 600-800°C. Said selection process preferably comprises the steps of:
a) Chemical XRF analysis of the available silico-aluminous mineral material,
b) Activation of the material at different temperatures from 400°C to 900°C in progressive steps of, e.g., 100°C,
c) Pozzolanic reactivity analysis of the material at each temperature,
d) Selection of the material the pozzolanic reactivity of which matches or surpasses the functional properties of cement clinker.

In a preferred embodiment of the invention, the method comprises a desulfurization process to remove sulphur oxides (SOx) from the combustion gas generated in the combustion chamber or the kiln. SOx, which primarily consists of sulphur dioxide (SO₂), is a pollutant that can have adverse effects on the environment and human health. The desulfurization process in this embodiment involves contacting the combustion gas with a calcium source to capture and remove the SOx. The calcium source can be introduced into the system in various forms, such as limestone (CaCO₃), hydrated lime (Ca(OH)₂), or quicklime (CaO), and in one or several locations of the cement plant, such as the cyclones of the preheater tower, existing wet scrubbers, or at the kiln feed.

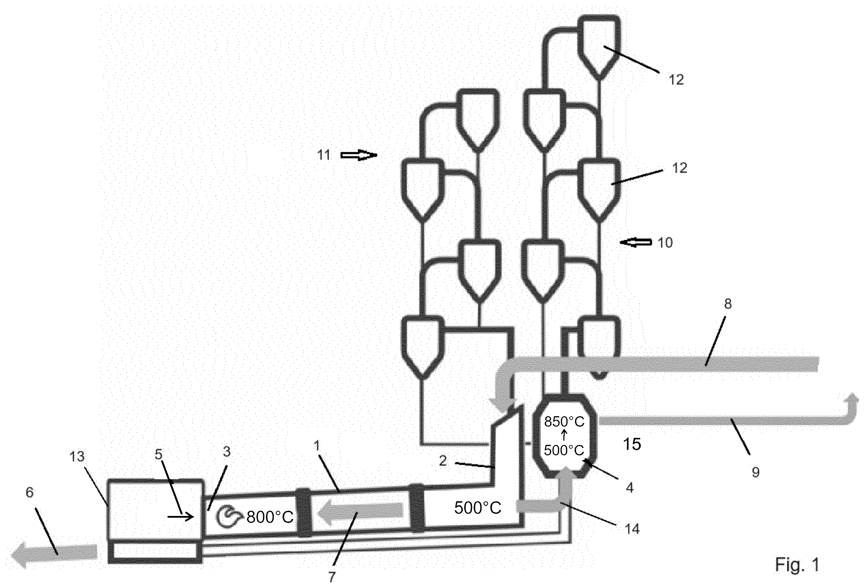

The invention will now be described in more detail with reference to an exemplary embodiment shown in Fig 1.

Fig. 1 illustrates a cement manufacturing plant, comprising a rotary kiln 1 having an inlet end with a kiln inlet chamber 2 and an outlet end 3, a main burner arranged at the outlet end 3, a combustion chamber 4 connected to the kiln inlet chamber 2 and a kiln feed installation opening into the kiln inlet chamber 2 for feeding a raw material 8 into the rotary kiln 1, wherein the rotary kiln 1 is configured to calcine a raw material 8 travelling (7) from the inlet end to the outlet end 3 in counter current to a combustion gas. The calcined pozzolanic material is leaving the outlet end 3 to be fed into a cooler 13, from which the cooled, pozzolanic material 6 is withdrawn.

The main burner of the rotary kiln 1 is operated with an alternative fuel 5. Combustion gas 14 is withdrawn from the inlet end of the rotary kiln 1 at a temperature of approximately 450-550°C and guided into the combustion chamber 4, which is configured as a precalciner of the cement manufacturing plant. In the combustion chamber 4, an alternative fuel 15 is combusted so that the combustion gas 14 is heated to a temperature of at least 850°C and maintained at said temperature level for at least 2 seconds. The heated combustion gas 9 is withdrawn from the combustion chamber 4 and used for, e.g. preheating the raw material or connected to a heat recovery system.

For example, the heated combustion gas can be introduced into a first string 10 and/or a second string 11 of a preheater tower of the cement manufacturing plant, the first string 10 and/or a second string 11 each comprising a plurality of preheaters 12, in which the raw material may be preheated in contact with the heated combustion gas.

## Claims

1. Method of producing a pozzolanic material in a cement manufacturing plant, the plant comprising a rotary kiln having an inlet end with a kiln inlet chamber and an outlet end, a main burner arranged at the outlet end, a combustion chamber connected to the kiln inlet chamber and a kiln feed installation opening into the kiln inlet chamber for feeding a raw material into the rotary kiln, wherein the rotary kiln is configured to calcine a raw material travelling from the inlet end to the outlet end in counter current to a combustion gas, the method comprising:
- providing a silico-aluminous mineral material susceptible of pozzolanic reactivity upon calcination,
- introducing the silico-aluminous mineral material into the rotary kiln via the kiln feed installation without having been thermally treated in the combustion chamber and calcining the silico-aluminous mineral material in the rotary kiln at a temperature of 400-900°C, preferably 600-900°C, in order to obtain said pozzolanic material,
- combusting a non-fossil, alternative fuel by means of the main burner for providing thermal energy to the calcination process,
- guiding the combustion gas from the kiln inlet chamber into the combustion chamber and providing an additional source of heat in the combustion chamber, thereby raising the temperature of the combustion gas to an elevated temperature of above 850°C and keeping the combustion gas at said elevated temperature for at least 2 seconds.

2. Method according claim 1, wherein the additional source of heat in the combustion chamber is obtained solely from the use of electrical energy.

3. Method according claim 1, wherein the additional source of heat in the combustion chamber is from combusting a fuel or from a combination of the combustion of a fuel and the use of electrical energy.

4. Method according to claim 3, wherein a non-fossil waste material, such as a waste solvent, is used as said fuel in the combustion chamber.

5. Method according to claim 3 or 4, wherein the total fuel used in the combustion chamber and the main burner has a chloride content of less than 0.2 wt.-%.

6. Method according to any one of claims 1 to 5, wherein the combustion chamber is a precalciner of the cement manufacturing plant.

7. Method according to any one of claims 1 to 6, wherein the combustion gas is withdrawn from the combustion chamber and used to dry and/or preheat the silico-aluminous mineral material before the silico-aluminous mineral material is introduced into the rotary kiln.

8. Method according to claim 7, wherein the cement manufacturing plant comprises a preheater tower having at least one string of cyclone preheaters, wherein the combustion gas is led through the at least one string of preheaters in counter-current to a flow of silico-aluminous mineral material for preheating the silico-aluminous mineral material.

9. Method according to any one of claims 3 to 8, wherein an additional alternative fuel is introduced into the rotary kiln via the kiln inlet chamber and, preferably being in a mixture with the silico-aluminous mineral material, is subjected to a gasification in order to obtain a syngas.

10. Method according to claim 9, wherein the syngas is guided into the combustion chamber and used as the fuel in the combustion chamber or constitutes a partial amount of the fuel in the combustion chamber.

11. Method according to any one of claims 1 to 10, wherein the cement manufacturing plant comprises a cooler arranged at the outlet end of the rotary kiln for cooling the pozzolanic material, wherein ambient air is led through the cooler as a cooling medium and, after having been preheated in the cooler, is used as combustion air in the combustion chamber.

12. Method according to any one of claims 1 to 11, wherein a raw clay material is used as said silico-aluminous mineral material.

13. Method according to any one of claims 1 to 12, wherein the combustion gas from the combustion chamber and the kiln contains SOx, which is removed from the combustion gas by contacting the combustion gas with a calcium source.
